# EUROPEAN PATENT APPLICATION

(11) **EP 2 781 719 A1**
(43) Date of publication of application: **24.09.2014**
(21) Application number: 13160242.7
(22) Date of filing: 20.03.2013
(51) Int. Cl.: F02B 43/08, F02D 19/08, C10B 53/02, C10L 5/44, F02M 21/02, F02B 29/04, F02M 21/04

(54) **Operating internal combustion engines on pyrolysis products**

(71) Applicant: Caterpillar Motoren GmbH & Co. KG, 24159 Kiel (DE)
(72) Inventor: von der Osten-Sack, Andreas, 24145 Kiel (DE)
(74) Representative: Kramer - Barske - Schmidtchen

(57) **Abstract**

To increases the overall efficienty of a pyrolysis based power plant, it is proposed to operate an internal combustion engine on a liquid fuel such as pyrolysis oil based fuel (8) and, in addition, pyrolysis gas (9) is added to charge air. This allows using otherwise not lost energy contained in the pyrolysis gas. Specifically, a pyrolysis gas supply unit (120, 220) is proposed that is configured for providing pyrolysis gas (9) into a charge air system (161,261) of the internal combustion engine (162, 262). The pyrolysis gas supply unit (120, 220) comprises inter alia a filtering and compressing unit (122, 222) for removing tar from the received pyrolysis gas (9) and pressurizing the pyrolysis gas (9), a pyrolysis gas regulating unit (124, 224) for regulating a flow of the filtered and compressed pyrolysis gas (9) leaving the pyrolysis gas regulating unit (124, 224), a pyrolysis gas admission valve (140, 240) for controlling the amount of the pyrolysis gas (9) provided to the charge air system (161, 261), and a pyrolysis gas admission unit (142, 242, 342) with a charge air passage (115, 215, 315) that is fluidly connectable to the charge air system (161, 261). The pyrolysis gas admission unit (142, 242, 342) is configured to provide pyrolysis gas (9) into the charge air passage (115, 215, 315).

## Description

### Technical Field

The present disclosure generally refers to operating internal combustion engines (ICEs) with multiple fuel types and more particularly to operating ICEs with fuels originating from a pyrolysis process.

### Background

Alternative fuels replacing crude oil based fuels are the subject of ongoing interest, in particular with respect to the replacement of crude oil based fuels such as diesel fuel, light fuel oil (LFO), and heavy fuel oil (HFO). Alternative fuels include first generation bio-fuels (e.g. palm oil, rapeseed oil, canola oil, oils based on animal fat) and second generation bio-fuels (e.g. oils made of non food corps, i.e. waste biomass).

Examples of second generation bio-fuel include "pyrolysis oils" obtained from the pyrolysis of, e.g., wood or agricultural wastes, such as the stalks of wheat or corn, grass, wood, wood shavings, grapes, and sugar cane. In general, pyrolysis oil is predominantly produced by the "Fast Pyrolysis" technology, which comprises rapid pyrolysation of biomass in a fluidized bubbling sand bed reactor, wherein the solid heat-carrying medium is circulated and, therefore, the residence time of solids is well-controlled and high heating rates (up to 1000 °C/second) are obtained.

In general, the hydrocarbon content of the waste reacts and generates pyrolysis products, such as pyrolysis gas, pyrolysis oils, and tar.

Pyrolysis gases contain combustible components such as carbon monoxide, methane, and hydrogen as well as inert components such as nitrogen, and carbon dioxide, and water. For example, a pyrolysis reactor can be operated in a range between 400 °C and 580 °C. A reaction performance at a temperature of 530 °C may result in a pyrolysis gas comprising 50 % by vol. carbon monoxide, 12 % by vol. methane, 3 % by vol. hydrogen, 2 % by vol. ethylene, 1 % by vol. propylene as well as 24 % by vol. carbon dioxide, 6 % by vol. nitrogen, and 0.04 % by vol. water.

The heating value of pyrolysis gases is low due to their low hydrocarbon content and high inert content. The heating value of pyrolysis gases depends on the specific pyrolysis process and may be in the range from, for example, 3 MJ/m3 to about 35 MJ/m3 in contrast to heating values for natural gas in the range of, for example, 30 MJ/m3 to 60 MJ/m3. In addition to the low energy content, pyrolysis gases exiting the reactor comprise often particles of tar and char. For example, 0.14 % by vol. of sediments such as tar or tar components may be part of the pyrolysis gas. However, pyrolysis gases are not as aggressive as pyrolysis oils.

The chemical composition and the physical properties of pyrolysis oils differ significantly from those of crude oil based fuel, for example, diesel, LFO, and HFO, in particular with respect to the high content of water and oxygen, resulting in a rather low heating value and reduced ignition properties.

Often, alternative fuels may have a low-cetane value. For example, pyrolysis gas may have methane values in the range of 12 to 40, while natural gas has a methane value of, for example, 80. Similarly, pyrolysis oil may have cetane values in the range of 4 to 15. In comparison, crude oil based fuels may have high cetane values, for example, diesel: 48-58, LFO: 40-52, and HFO: 28-41. The low methane and cetane values mainly affect the self ignition properties of pyrolysis gases and pyrolysis oils.

European patent application EP 12 157 287.9 filed on 28 February 2012 by Caterpillar Motoren GmbH & Co. KG discloses the operation of a power plant based on pyrolysis oil based fuel. That operation may, for example, employ a pyrolysis oil containing fuel as disclosed in WO 2011/120542 Al by Caterpillar Motoren GmbH & Co. KG and an ethanol-based fuel as disclosed in European patent application EP 12 157 275.4 filed on 28 February 2012 by Caterpillar Motoren GmbH & Co. KG. That operation may further be based on the method for operating an internal combustion engine as disclosed in European patent applications EP 12 157 282.0, EP 12 157 287.9 filed on 28 February 2012, and EP 12 185 039.0 by Caterpillar Motoren GmbH & Co. KG.

Moreover, EP 2 503 111 A1, EP 2 503 113 A1, and EP 2 503 110 Al by Caterpillar Motoren GmbH & Co. KG disclose combined cycle power generating systems based on direct organic Rankine cycle systems.

Moreover, European patent application EP 11 193 310.7 filed on 13 December 2011 by Caterpillar Motoren GmbH & Co. KG discloses an example of a cylinder head for an internal combustion engine for operation with gaseous or liquid fuel. The cylinder head comprises a fuel inlet valve casing for accommodating a fuel inlet valve, a fuel/air mixing chamber for mixing the fuel with air, and a fuel guiding portion connecting the fuel inlet valve casing to the fuel/air mixing chamber and integrally formed with the cylinder head to define a first fuel feeding passage and a second fuel feeding passage extending from fuel inlet valve casing to the fuel/air mixing chamber.

WO 2011/110128 Al discloses generally the operation of two or four-stroke engines with pyrolysis products. US 6,039,774 discloses generally a pyrolysis plant including gas engines for combusting pyrolysis gas.

The present disclosure is directed, at least in part, to improving or overcoming one or more aspects of prior systems. Moreover, the present disclosure is directed to increasing the over all efficiency of pyrolysis based power plant technology.

### Summary of the Disclosure

According to an aspect of the present disclosure, a pyrolysis gas supply unit is disclosed for providing pyrolysis gas into a charge air system of an internal combustion engine, which is configured for operation with a liquid fuel. The pyrolysis gas supply unit comprises a pyrolysis gas inlet for receiving pyrolysis gas, a filtering and compressing unit comprising a pyrolysis gas filter unit for removing tar from the received pyrolysis gas and a compressor unit for pressurizing the pyrolysis gas, a pyrolysis gas regulating unit for regulating a flow of the filtered and compressed pyrolysis gas leaving the pyrolysis gas regulating unit, a pyrolysis gas admission valve for controlling the amount of the pyrolysis gas provided to the charge air system, and a pyrolysis gas admission unit comprising a charge air passage that is fluidly connectable to the charge air system. The pyrolysis gas admission unit is fluidly connected to the pyrolysis gas admission valve and is configured to provide pyrolysis gas to the charge air passage.

According to another aspect of the present disclosure, an internal combustion engine system configured for combusting a liquid fuel with charge air, which is enriched with pyrolysis gas, comprises an internal combustion engine, a liquid fuel system, a charge air system, and a pyrolysis gas supply unit, for example as described above, that is configured for providing pyrolysis gas into the charge air system.

According to another aspect of the present disclosure, a pipe section comprises a charge air passage and a release nozzle opening into the charge air passage.

According to another aspect of the present disclosure, an insert element for mounting within a charge air manifold of an internal combustion engine is configured to provide cylinder specific openings for releasing pyrolysis gas into the charge air manifold, for example, into charge air passing within the charge air manifold.

According to another aspect of the present disclosure, a method for operating an internal combustion engine based on pyrolysis based fuels comprises enriching charge air with pyrolysis gas, and combusting pyrolysis oil based fuel, crude oil based fuel, and/or ethanol/castor oil based fuel with the pyrolysis gas enriched charge air.

In some embodiments of the pyrolysis gas supply unit, the gas filter unit is fluidly connected to the pyrolysis gas inlet and the compressor is fluidly connected to the filter unit, or vice versa.

In some embodiments of the pyrolysis gas supply unit, the gas regulating unit is fluidly connected to the compressor unit, the gas admission valve is fluidly connected to the gas regulating unit, and the pyrolysis gas admission unit is fluidly connected to the gas admission valve.

Moreover, the mixed fuel application is proposed in particular for pyrolysis-based power plants, which have the pyrolysis reactor on site.

Other features and aspects of this disclosure will be apparent from the following description and the accompanying drawings.

### Brief Description of the Drawings

Fig. 1 shows a schematic illustration of an ICE system operating on pyrolysis process based fuels;
Fig. 2 is a schematic illustration of a pre-charge air compressor supply system for providing pyrolysis gas to an ICE;
Fig. 3 is a schematic illustration of a post-charge air compressor supply system for providing pyrolysis gas to an ICE; and
Fig. 4 is a schematic illustration of an exemplary pyrolysis gas admission unit for enriching charge air with pyrolysis gas within a charge air manifold.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that, in view of the non-self-ignition feature of pyrolysis gases, pyrolysis gas may be added to the charge air system, be it upstream or downstream of a compressor system or between stages of the compressor system. Thereby, it is proposed to operate at the same time (or at least at those times where pyrolysis gas should be combusted as well) an ICE with, for example, the pyrolysis oil and the pyrolysis gas, which both may originate from a pyrolysis reactor being on site.

Operating an ICE with a liquid fuel such as pyrolysis oil and additionally pyrolysis gas may require adapting the ICE in a dual fuel like manner but, thereby, allows reducing the number of ICEs involved in the energy conversion. This is because an ICE - configured in dual fuel-like manner - is sufficient to convert pyrolysis gas and pyrolysis oil into energy such that a specific gas engine for combusting the pyrolysis gas is no longer required to be provided on site.

Moreover, by using the energy of the pyrolysis gas, an increase of the overall efficiency of a power plant based on biomass feed to a pyrolysis reactor may be achieved. The proposed concept can in particular be used in the case that, at a combined cycle power generating system both, the generation of pyrolysis oils and pyrolysis gases together are used in a simple way to generate power with an excellent over all efficiency. Moreover, the proposed concept may be based on dual fuel engines such as the Caterpillar M46DF Dual Fuel engines.

The present disclosure may further be based in part on the realization that despite the low energy content, simultaneously combusting pyrolysis gas added to the charge air together with the pyrolysis oil based fuel is an efficient approach for using the energy content of the various products of the pyrolysis reaction.

It was further realized that a pyrolysis gas supply unit may be provided between a pyrolysis gas source and the charge air system that treats and conditions the pyrolysis gas for the combustion process. The pyrolysis gas supply unit may be provided in addition to a treatment unit and a conditioning unit for the pyrolysis oil/crude oil based fuels as disclosed, for example, in the above referenced European patent applications. The respective units are configured to ensure safe operation of the ICE with the various fuel types and combination.

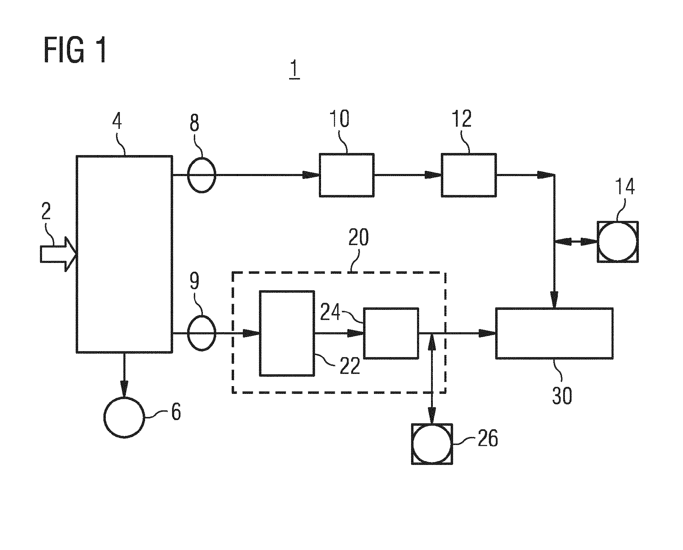

Fig. 1 shows a schematic illustration of an ICE system 1 for operating on pyrolysis based fuels originating from a biomass 2, such as wood or agricultural wastes. Biomass 2 is processed in a pyrolysis reactor 4, which outputs char 6, pyrolysis oil 8, and pyrolysis gas 9.

In general, about 15 % by vol. to 35 % by vol., for example 20 % by vol. of the output of pyrolysis reactor 4 is pyrolysis gas 9. As mentioned above, pyrolysis gas is rich on CO components and has a low energy content (low heating value). Pyrolysis gas is also referred to as a producer gas. In state of the art pyrolysis reactors, pyrolysis gas 9 is partially (for example 20 % by vol. to 60 % by vol.) used for pre-heating within pyrolysis reactor 4 (reactor internal re-use of pyrolysis gas), while the rest is either burned or directly released into the environment.

In addition to the low energy content, pyrolysis gas 9 comprises particles of tar and char that may effect the compression (and the compressor system) as well as the combustion process.

ICE system 1 is configured to operate an ICE 30 with the pyrolysis products pyrolysis oil 8 and pyrolysis gas 9. For that purpose, ICE 30 is configured in a dual fuel-like manner, as liquid and gaseous fuels are provided as fuels. Respective liquid fuel systems and gaseous fuel systems are provided.

Pyrolysis oil 8 is provided as a pyrolysis oil based fuel to ICE 30 as disclosed, for example, in the above mentioned European patent applications EP 12 157 287.9, EP 12 157 282.0, and EP 12 185 039.0 by Caterpillar Motoren GmbH & Co. KG. Accordingly, a pyrolysis oil treatment system 10 and a fuel conditioning unit 12 may be installed between pyrolysis reactor 4 and ICE 30 to prepare the pyrolysis oil for combustion. An intermediate storage tank 14 may be provided for storing treated and/or conditioned pyrolysis oil based fuel.

With respect to providing pyrolysis gas 9 to ICE 30, a pyrolysis gas supply unit 20 is provided. Pyrolysis gas supply unit 20 includes a gas cleaning and gas compression unit 22 for cleaning pyrolysis gas 9 from tar and compressing pyrolysis gas 9 to a pressure required to supply the same into the charge air gas flow. Pyrolysis gas supply unit 20 includes further a gas regulating unit 24 for controlling the gas supply and allowing, for example, emergency shut off of the gas supply. Moreover, pyrolysis gas supply unit 20 may include or have fluidly connected thereto a pyrolysis gas intermediate storage unit 26 to store larger amounts of cleaned and compressed pyrolysis gas for later supply of ICE 30.

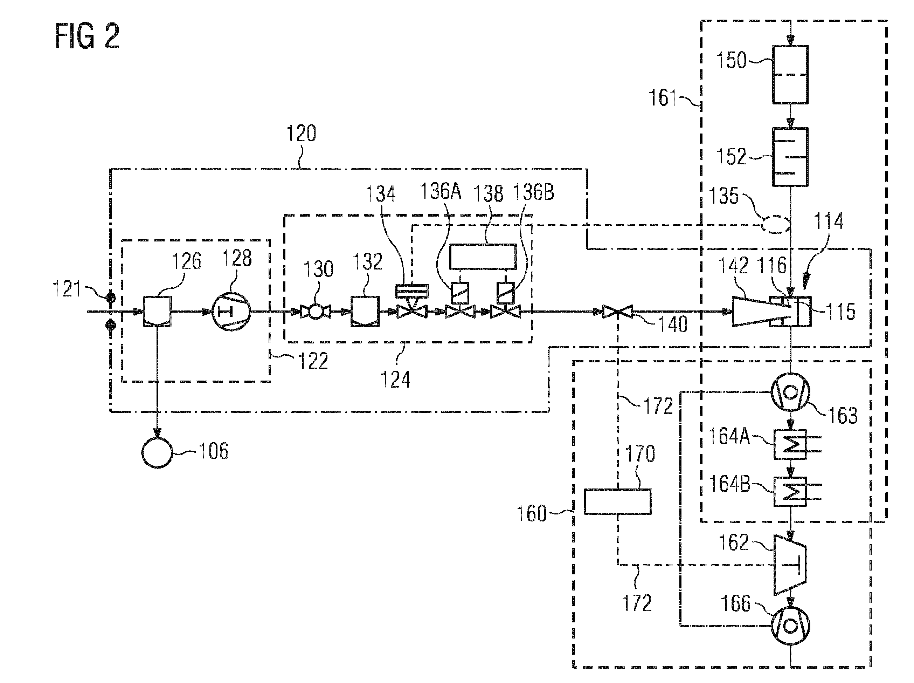

Referring to Fig. 2, an exemplary pyrolysis gas supply unit 120 is configured to provide pyrolysis gas into a charge air system 161 of an ICE unit 160 with an ICE 162.

Charge air system 161 for ICE 162 comprises a combustion air filter 150 and a combustion air silencer 152. Charge air system 161 comprises further - in series fluid connection and, for example, fixedly attached to ICE 162 - a turbo-charger compressor 163, a high-temperature charge air cooler 164A, and a low-temperature charge air cooler 164B such that compressed and cooled charge air is provided to combustion chambers of ICE 162. Exiting exhaust gas drives turbo-charger compressor 163 via a turbo-charger turbine 166.

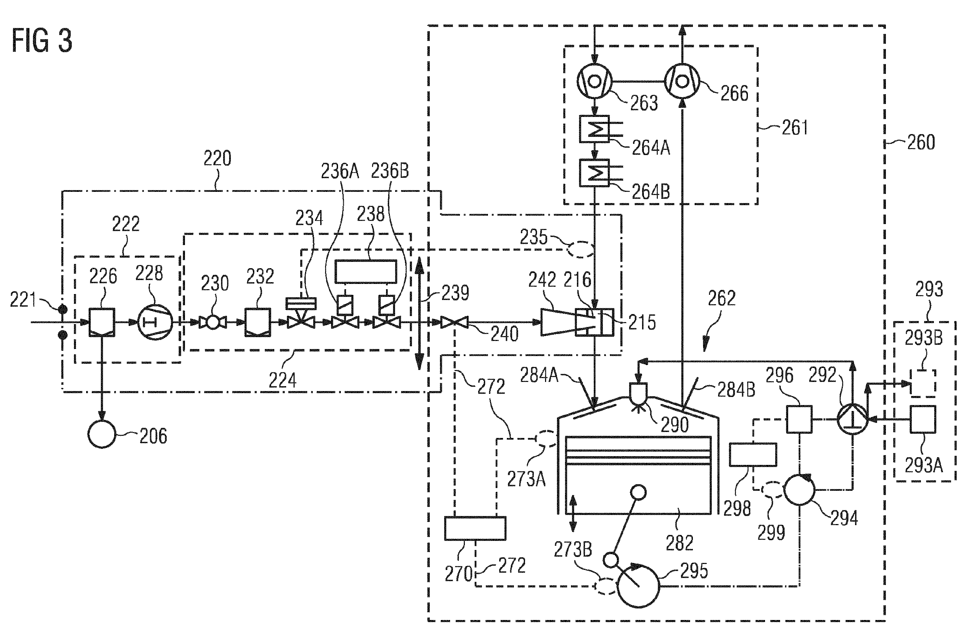

Fig. 2 illustrates that, after the charge air has been filtered by combustion air filter 150 and noise reduction has been achieved by passing through a combustion air silencer 152, the charge air is enriched with pyrolysis gas in a pyrolysis gas admission unit 142 provided by pyrolysis gas supply unit 120. As pyrolysis gas is provided upstream of a compressor system of ICE unit 160, a detailed description of ICE 162 is not provided in connection with Fig. 2. However, in principle the structure may be similar to the one being in more detail described in connection with Fig. 3.

Pyrolysis gas supply unit 120 is part of a pyrolysis gas system that further may include piping from pyrolysis reactor 4 and be configured, for example, in a double walled configuration for safety reasons.

Pyrolysis gas supply unit 120 is fluidly connected via a pyrolysis gas inlet 121 to pyrolysis reactor 4 to receive pyrolysis gas. Referring to the exemplary embodiment shown in Fig. 2, pyrolysis gas supply unit 120 further comprises a filtering and compressing unit 122, a pyrolysis gas regulating unit 124, a pyrolysis gas admission valve 140, and pyrolysis gas admission unit 142.

Filtering and compressing unit 122 comprises a pyrolysis gas filter unit 126 for removing tar 106 from the received pyrolysis gas. Pyrolysis gas filter unit 126 is fluidly connected to the pyrolysis gas inlet 121 and may comprise, for example, a centrifuge based filter system, a cyclone based filter system, and/or a rotation net based filter system. Pyrolysis gas filter unit 126 may further comprise an output for tar 106. For example, the content of sediments such as tar or tar components within the pyrolysis gas may be in the range of 0.01 % by vol. when leaving pyrolysis gas filter unit 126.

Filtering and compressing unit 122 comprises further a compressor unit 128 for compressing the filtered pyrolysis gas. Compressor unit 128 is fluidly connected to pyrolysis gas filter unit 126 and pyrolysis gas regulating unit 124. As the required pressure is only slightly above ambient pressure, a Roots blower or a small ventilator may be sufficient to provide pressures of, for example, several tens of a bar such as in the range from 0.05 bar to 0.3 bar.

Pyrolysis gas regulating unit 124 is configured for regulating the flow of the filtered and compressed pyrolysis gas at an exit of pyrolysis gas regulating unit 124, which is fluidly connected to pyrolysis gas admission valve 140. Pyrolysis gas admission valve 140 controls the amount of pyrolysis gas provided to charge air system 161.

Pyrolysis gas is provided to charge air system 161 within pyrolysis gas admission unit 142. Pyrolysis gas admission unit 142 may be considered to be a pyrolysis gas injecting and mixing unit. Pyrolysis gas admission unit 142 comprises a charge air passage 115 that is fluidly connectable to and, thus, is a part of charge air system 161. For example, pyrolysis gas admission unit 142 is a pipe section 114 providing charge air passage 115 for guiding the charge air there through, wherein pipe section 114 comprises a release nozzle 116 that opens into charge air passage 115. As shown in Fig. 2, an exit of combustion air silencer 152 is fluidly connected to an entrance of charge air passage 115 and an exit of charge air passage 115 is fluidly connectable to an entrance of turbo-charger compressor 163.

Moreover, pyrolysis gas admission unit 142 is fluidly connected to pyrolysis gas admission valve 140 and is specifically configured to provide pyrolysis gas to charge air passage 115, for example, via release nozzle 116 that may reach into charge air passage 115.

The embodiment of Fig. 2 requires only one pyrolysis gas admission unit 142 as the pyrolysis gas is provided to the single stream of charge air passing through charge air passage 115. In contrast, the embodiment of Fig. 3 illustrates employing pyrolysis gas admission units for all or at least a sub-set of cylinder units.

Similar to gas regulating units in use with gaseous fuel operated engines, pyrolysis gas regulating unit 124 may comprise - as exemplarily shown in Fig. 2 -a service valve 130, a pyrolysis gas purity indicator and safety filter 132, and a control valve 134 regulated based on pressure signal provided by a pressure sensor 135, which measures the charge air pressure at an exit of combustion air silencer 152. Control valve 134 is specifically adapted to adjust the flow of the pyrolysis gas through gas regulating unit 124.

Pyrolysis gas purity indicator and safety filter 132 may be a conventional filter such as a bag house filter. Pyrolysis gas purity indicator and safety filter 132 may be used to indicate that the filtering by pyrolysis gas filter unit 126 is working improperly and, accordingly, that the content of sediments such as tar or tar components within the pyrolysis gas is above an acceptable range of 0.01 % by vol. In addition, pyrolysis gas purity indicator and safety filter 132 may remove any contamination with, for example, metal particles, generated after pyrolysis gas filter unit 126, thereby acting as a safety filter for the gas control valves.

Gas regulating unit 124 may further comprise a set of, for example, two redundant shut-off valves 136A, 136B operated by a shut-off valve control unit 138, and a venting valve (not shown). Shut-off valves 136A, 136B are adapted to instantaneously open or restrict the flow of the pyrolysis gas. The venting valve may be, for example, fluidly connected to a storing tank, and may be adapted to release pyrolysis gas left over within gas regulating unit 124 after operation of ICE 162 on pyrolysis gas has been stopped. Some embodiments may comprise less or more components, for example, only one shut-off valve.

Referring again to pyrolysis gas admission valve 140, which is adapted to allow or restrict the flow of pyrolysis gas to mix with charge air flowing through charge air system 161. Specifically, pyrolysis gas admission valve 140 is adapted to dose pyrolysis gas into pyrolysis gas admission unit 142.

It is noted that pyrolysis gas admission valve 140 may only allow or restrict flow of pyrolysis gas if pyrolysis gas is supplied from pyrolysis reactor 4 and control valve 134 and shut-off valves 136A, 136B of gas regulating unit 124 allow flow of pyrolysis gas from pyrolysis reactor 4 into charge air system 161.

In some embodiments, pyrolysis gas admission valve 140 is a solenoid actuated valve in which springs hold a lower surface of a movable disk against an upper surface of a stationary disk or plate, the two surfaces being configured to provide a sealed relationship.

A control unit 170 is connected to pyrolysis gas admission valve 140 via a control connection line 172 in Fig. 2, and configured to control operation of pyrolysis gas admission valve 140 depending on operating parameters of ICE 162 received via a further control connection line 172 from sensors (not shown) monitoring the ICE operation.

Fig. 3 is a schematic diagram illustrating a configuration in which pyrolysis gas is intermixed with charge air immediately upstream of each cylinder unit and, thus, pressurized pyrolysis gas is provided to pressurized charge air. This configuration is related to a conventional dual fuel internal combustion engine that comprises a gas admission valve for each cylinder unit to add gaseous fuel in a controlled manner to the charge air.

As shown in Fig. 3, the components of a pyrolysis gas supply unit 220 may essentially be similarly arranged and comprise similar components as described for the embodiment shown in Fig. 2.

For example, pyrolysis gas supply unit 220 comprises a pyrolysis gas inlet 221, and a filtering and compressing unit 222 with a pyrolysis gas filter unit 226 having an output for tar 206 and a compressor unit 228.

As higher pressures compared to the embodiment of Fig. 2 need to be reached for the pyrolysis gas, compressor unit 228 may be a rotary compressor or a screw spindle compressor. For example, for a single stage turbocharged ICE a pressure in the range from 1.2 bar to 5 bar, for example of 3.5 bar, may be needed while for a two stage turbocharged ICE a pressure of 5 bar to 7 bar, for example 6 bar, may be required. Similarly, for two stage turbocharged ICEs, an alternative embodiment may be to provide the pyrolysis gas in-between the compressor stages such that pressures of the respective pressure region, for example, 3 bar may be sufficient.

Pyrolysis gas supply unit 220 further comprises a pyrolysis gas regulating unit 224 with in sequence fluidly connected components such as a service valve 230, a pyrolysis gas purity indicator and safety filter 232, a control valve 234 regulated based on pressure signal provided by a pressure sensor 235 (pressure sensor 235 being arranged downstream of a low temperature cooler 265B), for example two (redundant) shut-off valves 236A, 236B operated by a shut-off valve control unit 238, and a venting valve (not shown). For further description of the function of those components, it is referred to the description provided in connection with Fig. 2.

In contrast to the embodiment of Fig. 2, shut-off valve 236B is fluidly connected to a plurality of pyrolysis gas admission valves 240 (as indicated by arrow 239), one of which being shown in Fig. 3 in connection with a respective pyrolysis gas admission unit 242, which is integrated in a schematic illustration of components of a respective cylinder unit of an ICE unit 260. Pyrolysis gas admission unit 242 may be integrated into the cylinder head as disclosed, for example, in the above mentioned European patent application EP 11 193 310.7 for combusting natural gas. As the pyrolysis gas is added to a combustion that is primarily based on a liquid fuel such as pyrolysis oil based fuel, only a single main liquid fuel injector (such as an injector 290 shown in Fig. 3) is sufficient-in contrast to dual fuel concepts that may also require an ignition injector for injecting an ignition amount of fuel for the gaseous fuel operation.

In addition to the pyrolysis gas system as descried above, ICE unit 260 comprises an ICE, a charge air system 261 based on a single stage turbocharged system or a two stage turbocharged system, an exhaust system, a liquid fuel system.

The ICE comprises an engine block with a plurality of cylinders 280, respective pistons 282 driving a crankshaft 295, respective inlet valves 284A, and outlet valves 284B.

As illustrated in Fig. 3, charge air system 261 comprises a turbocharger compressor 263, which may be the only compressor or a high pressure compressor in a two stage turbocharged system. The charge air system further comprises a high-temperature charge air cooler 264A, and a low-temperature charge air cooler 264B as well as a turbocharger turbine 266 of the exhaust system.

In some embodiments, each cylinder 280 may be covered by a single cylinder head. Some embodiments may comprise one or more cylinder heads covering more than one cylinder. Moreover, the cylinders may be arranged, for example, in an inline V, W, or any other known configuration.

Charge air system 261, specifically an outlet of low-temperature charge air cooler 264B, is fluidly connected to inlet valves 284A via charge air passages 215 of respective pyrolysis gas admission units 242. Release nozzles 216 release pyrolysis gas into respective charge air passages 215

Inlet valves 284A are arranged within respective intake ports, and are adapted to allow or restrict flow of compressed charge air (for pure liquid fuel operation) or a mixture of compressed charge air and pyrolysis gas for combined combustion of liquid fuel and pyrolysis gas.

Some embodiments may comprise a charge air manifold fluidly interconnecting charge air system 261 and the intake ports integrated for example, in individual cylinder heads.

For a combined system as disclosed in, for example, the above mentioned European patent application EP 12 185 039.0, the liquid fuel system includes injectors 290, a fuel pump 292 , an engine fuel cycle, a tank farm 293 for providing a variety of liquid fuels such as pyrolysis oil based fuels, crude oil based fuels, or ethanol/castor oil based fuels in respective tanks 293A. The engine fuel cycle may return fuel not used by fuel pump 292 to the same tank 293A or separate tanks 293B. Fuel pump 292 may be driven by actuators 296 interacting with a camshaft 294 and crankshaft 295 and controlled by a fuel pump control 298 using information acquired by a camshaft speed sensor 299.

A control unit 270 is connected to pyrolysis gas admission valves 240 and various sensors such as a detonation sensor 273A and a crankshaft speed sensor 273B, for example via control connection lines 272, as well as camshaft speed sensor 299 and/or pressure sensor 235. Control unit 270 is configured to control operation of, for example, pyrolysis gas admission valves 240.

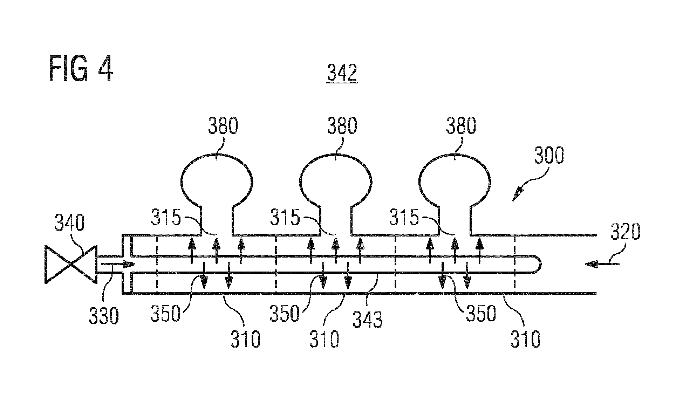

Fig. 4 shows an exemplary embodiment of a pyrolysis gas admission unit 342 for supplying pressurized pyrolysis gas. In contrast to the cylinder specific supply of pyrolysis gas disclosed in connection with Fig. 3, Fig. 4 illustrates a supply of the pressurized pyrolysis gas into a charge air manifold 300, thereby only requiring a single pyrolysis gas admission valve 340.

In the exemplary embodiment of Fig. 4, charge air manifold 300 is composed of a series of cylinder specific units 310, each cylinder specific unit 310 providing a charge air passage 315 to a respective cylinder 380. Pressurized charge air may be provided from one end of the series of cylinder specific units 310 as indicated by arrow 320.

For the same or the opposing end (the later shown in Fig. 4), a insert element 343 reaches into charge air manifold 300. Insert element 343 may have, for example, a tubular configuration. Pyrolysis gas admission valve 340 doses pyrolysis gas along arrow 330 into insert element 343, which then releases pyrolysis gas into charge air passages 315 via openings 350. The number and arrangement of openings 350 may be configured such that comparable amounts of pyrolysis gas are provided to the cylinder units regardless of any drop in pressure either along charge air manifold 300 or along insert element 343.

### Industrial Applicability

The disclosed concept relates to operating an ICE with a combination of a liquid fuel such as pyrolysis oil based fuel, crude oil based fuel (HFO or Diesel fuel), and/or ethanol/castor oil based fuel together with pyrolysis gas.

To ensure proper operation of ICE units 160, 260, control unit 170, 270 may be configured to control pyrolysis gas admission valves 140, 240 to adapt the amount of pyrolysis gas provided by pyrolysis gas admission valves 140, 240 into charge air system 161, 261 in dependence of the load of the ICE, or various sensor signals received.

In some embodiments, control units 170, 270 is configured to control the energy content contributed by the pyrolysis gas to be in the range of about 10 % to 30 %, for example, in the range from 20 % to 25 % of the total energy content of the fuel combusted by ICE 162, 262.

Moreover, in some embodiments, control unit 170, 270 is configured to control the compressor system to compress the pyrolysis gas in dependence of at least one of a load of ICE 162, 262, an output and/or intermediate pressure of the compressor system, an amount of liquid fuel provided for injection by the fuel system, for example fuel pump 292, a detonation signal monitoring a detonation within a cylinder unit, and the temperature of the charge air and/or the pyrolysis gas.

Control unit 170, 270 may be configured to perform the above, for example, based on pressure values measured by sensors such as pressure sensor 135, 235, detonation sensor 273A, and crankshaft speed sensor 273B. Control unit 170, 270 may be a single microprocessor or plural microprocessors that may include means for controlling, among others, an operation of the various components of ICE unit 160, 260, for example, inlet valve 284A, starter valve, outlet valve 284B, pyrolysis gas regulating unit 124, 224, and pyrolysis gas admission valve 140, 240. Control unit 170, 270 may be a general engine control unit (ECU) capable of controlling numeral functions associated with ICE unit 160, 260 and/or its associated components. Control unit 170, 270 may include electronic components required to run an application such as, for example, a memory, a secondary storage device, and a processor such as a central processing unit or any other means known in the art for controlling ICE unit 160, 260 and its various components.

Various other known circuits may be associated with control unit 170, 270, including power supply circuitry, signal-conditioning circuitry, communication circuitry, and other appropriate circuitry. Control unit 170, 270 may analyze and compare received and stored data, and, based on instructions and data stored in memory or input by a user, determine which action is required. For example, control unit 170, 270 may compare received values with target values stored in memory, and based on the results of the comparison, control unit 170, 270 may transmit signals to one or more components to alter the operation status thereof.

Control unit 170, 270 may include any memory device known in the art for storing data relating to operation of ICE unit 160, 260 and its components such as pressures, temperatures, and detonation timing. The data may be stored in the form of one or more maps that describe and/or relate, for example, valve opening timings. Each of the maps may be in the form of tables, graphs, and/or equations, and include a compilation of data collected from lab and/or field operation of ICE system 1 with ICE units 160, 260. The maps may be generated by performing instrumented tests on the operation of ICE units 160, 260 under various operating conditions while varying parameters associated therewith. Control unit 170, 270 may reference those maps and control operation of one component in response to the desired operation of another component.

For example, control unit 170, 270 may control a method for operating an internal combustion engine based on pyrolysis based fuels such that charge air is enriched with pyrolysis gas, and pyrolysis oil based fuel, crude oil based fuel, and/or ethanol/castor oil based fuel is combusted with the pyrolysis gas enriched charge air.

It may be controlled that the charge air may be enriched with pyrolysis gas downstream of a compressor system of the internal combustion engine being a single stage compressor system, downstream of a high-pressure stage of the compressor system being a two stage compressor system, and/or between a low-pressure stage and a high-pressure stage of the compressor system being a two stage compressor system.

It may be controlled further that the energy content of the pyrolysis gas to be in the range of about 10 % to 35 %, for example, in the range from 10 % to 30 % such as 20 % to 25 % of the total energy content of the fuel combusted in the internal combustion engine, and/or that the pyrolysis gas is compressed in dependence of at least one of a load of the internal combustion engine, an output/intermediate pressure of the compressor system, an amount of liquid fuel provided for injection, monitoring a detonation within a cylinder unit, and the temperature of the charge air and/or the pyrolysis gas.

The load dependence may affect the amount of provided pyrolysis oil such that, at a low load of about 25 % to 30 % of the maximum load, 10 % of the energy content may be provided by pyrolysis gas to operate the engine fat mainly on pyrolysis oil. At higher loads, for example higher than 55 %, about 30 % of the energy content may be provided by pyrolysis gas.

As an example for single stage turbocharged engine system, the pyrolysis gas pressure at gas injecting and mixing unit 242 may be controlled to be about 0.1 bar to 0.5 bar higher than the compressed charge air. Accordingly, control unit 270 may control the amount of pyrolysis gas to be delivered based on a charge air pressure (measured, for example, with pressure sensor 235) of 0.8 bar to 1.2 bar for low load, a charge air pressure of 1.2 bar to 1.5 bar at a load of about 55 %, a charge air pressure of 2.1 bar to 2.6 bar at a load of about 75 %, and a charge air pressure about 3.6 bar for 100 % load.

Herein, the term "large internal combustion engine" may refer to internal combustion engines which may be used as main or auxiliary engines of stationary power providing systems such as power plants for production of heat and/or electricity as disclosed, for example, in the above referenced European patent application EP 12 157 287.9.

In addition, the term "internal combustion engine" as used herein is not specifically restricted and comprises any engine, in which the combustion of a fuel occurs with an oxidizer to produce high temperature and pressure gases, which are directly applied to a movable component of the engine, such as pistons or turbine blades, and move it over a distance thereby generating mechanical energy. Thus, as used herein, the term "internal combustion engine" comprises piston engines and turbines, which can, for example, be operated with alternative fuels such as pyrolysis oil.

Examples of such engines that are suitable for adaptation to alternative fuels include medium speed internal combustion diesel engines, like inline and V-type engines of the series M20, M25, M32, M43 as well as respective dual fuel engines such M46DF manufactured by Caterpillar Motoren GmbH & Co. KG, Kiel, Germany, operated in a range of 500 to 1000 rpm. Moreover, the disclosed concept may be applied to two stroke engines.

Although the preferred embodiments of this invention have been described herein, improvements and modifications may be incorporated without departing from the scope of the following claims.

## Claims

1. A pyrolysis gas supply unit (120, 220) for providing pyrolysis gas (9) into a charge air system (161,261) of an internal combustion engine (162, 262), which is configured for operation with a liquid fuel (8), the pyrolysis gas supply unit (120, 220) comprising:
a pyrolysis gas inlet (121, 221) for receiving pyrolysis gas (9);
a filtering and compressing unit (122, 222) comprising a pyrolysis gas filter unit (126, 226) for removing tar from the received pyrolysis gas (9) and a compressor unit (128, 228) for pressurizing the pyrolysis gas (9);
a pyrolysis gas regulating unit (124, 224) for regulating a flow of the filtered and compressed pyrolysis gas (9) leaving the pyrolysis gas regulating unit (124, 224);
a pyrolysis gas admission valve (140, 240) for controlling the amount of the pyrolysis gas (9) provided to the charge air system (161, 261); and
a pyrolysis gas admission unit (142, 242, 342) comprising a charge air passage (115, 215, 315) that is fluidly connectable to the charge air system (161, 261), the pyrolysis gas admission unit being fluidly connected to the pyrolysis gas admission valve (140, 240) and being configured to provide pyrolysis gas (9) to the charge air passage (115, 215, 315).

2. The pyrolysis gas supply unit (120, 220) of claim 1,
wherein the pyrolysis gas filter unit (126, 226) comprises at least one of a centrifuge based filter, a cyclone based filter, and a rotating net based filter, and/or the compressor unit (128, 228) comprises at least one of a rotary compressor, a Root blower, a small ventilator, and a screw spindle compressor.

3. The pyrolysis gas supply unit (120, 220) of claim 1 or claim 2, wherein the pyrolysis gas regulating unit (124, 224) comprises at least one of a service valve (130, 230), a pyrolysis gas purity indicator and safety filter (132, 232), a pressure sensor (135, 235) based control valve (234), a shut-off valve (236A, 236B), a venting valve, and a shut-off valve control unit (138, 238).

4. The pyrolysis gas supply unit (120, 220) of any one of claim 1 to claim 3, wherein the pyrolysis gas admission unit (142, 242, 342) comprises at least one of
a cylinder head having integrated therein the charge air passage (215) and a release nozzle (216) opening into the charge air passage (215),
a pipe section (114) providing the charge air passage (115), the pipe section (114) comprising a release nozzle (116) opening into the charge air passage (115), and
an insert element (343) for mounting within a charge air manifold (300) of the internal combustion engine, the insert element (343) providing cylinder specific openings (350) for releasing the pyrolysis gas (9) into the charge air within the charge air manifold (300).

5. The pyrolysis gas supply unit (120, 220) of any one of claim 1 to claim 4, wherein, for each cylinder unit of the internal combustion engine, a pyrolysis gas admission valve (240) and a pyrolysis gas admission unit (242) is provided to cylinder specifically enrich charge air with pyrolysis gas (9).

6. An internal combustion engine system (1) configured for combusting a liquid fuel (8) with charge air, which is enriched with pyrolysis gas (9), the internal combustion engine system (1) comprising:
an internal combustion engine (162, 262);
a liquid fuel system (292, 294, 296);
a charge air system (161, 261); and
a pyrolysis gas supply unit (120, 220) according to any one of the preceding claims configured for providing the pyrolysis gas (9) into the charge air system (161, 261).

7. The internal combustion engine system (1) of claim 6, wherein the internal combustion engine system (1) further comprises a compressor system (163, 263) for compressing the charge air and
wherein the pyrolysis gas supply unit (120, 220) is configured to provide the pyrolysis gas (9) upstream and/or downstream and/or between stages of the compressor system (163, 263) into the charge air system(161, 261).

8. The internal combustion engine system (1) of claim 7, wherein the compressor system (163, 263) is configured to compress the pyrolysis gas (9) to a pressure of
up to 0.3 bar when providing the pyrolysis gas (9) upstream of the compressor system (163, 263);
up to 4 bar, for example 3.5 bar, when providing the pyrolysis gas (9) downstream of the compressor system (163, 263) being a single stage compressor system;
up to 7 bar, for example 6 bar, when providing the pyrolysis gas (9) downstream of a high-pressure stage of the compressor system (163, 263) being a two stage compressor system; and
up to 4 bar, for example 3.5 bar, when providing the pyrolysis gas (9) between a low-pressure stage and a high-pressure stage of the compressor system (163, 263) being a two stage compressor system, and/or
wherein the pressure provided by the compressor system (163, 263) is set in dependence of a load of the internal combustion engine (162, 262).

9. The internal combustion engine system (1) of any one of claim 6 to claim 8, wherein the internal combustion engine system (1) further comprises a control unit (170, 270) that is configured to control the compressor unit (128, 228) and/or the pyrolysis gas admission valve (140, 240) to adapt the pressure of the pyrolysis gas (9) and/or the amount of the pyrolysis gas (9) provided by the pyrolysis gas admission valve (140, 240) into the charge air system (161, 261) in dependence of the load of the internal combustion engine (162,262).

10. The internal combustion engine system (1) of claim 9, wherein the control unit (170, 270) is configured to control the energy content provided by the pyrolysis gas to the combustion to be in the range of about 10 % to 35 %, for example, in the range from 20 % to 25 % of the total energy content of fuel combusted in the internal combustion engine (162, 262).

11. The internal combustion engine system (1) of any one of claim 6 to claim 10, wherein the control unit (170, 270) is configured to control the compressor system (163, 263) to compress the pyrolysis gas (9) in dependence of at least one of a load of the internal combustion engine (162, 262), an output and/or intermediate pressure of the compressor system (163, 263), an amount of liquid fuel (8) provided for injection by the liquid fuel system (292, 294, 296), a detonation signal monitoring a detonation within a cylinder unit (310), and a temperature of the charge air and/or the pyrolysis gas (9).

12. The internal combustion engine system (1) of any one claim 6 to claim 11, further comprising a pyrolysis gas intermediate storage unit (26) for storing filtered and/or pressurized pyrolysis gas (9), wherein the pyrolysis gas intermediate storage unit (26) is fluidly connected to the pyrolysis gas supply unit (129, 220) downstream of the compressor unit (128, 228).

13. The internal combustion engine system (1) of any one of claim 6 to claim 12, wherein the internal combustion engine (162, 262) is configured to operate on pyrolysis oil based fuel (8), crude oil based fuel, and/or ethanol/castor oil based fuel.

14. A method for operating an internal combustion engine (162, 262) based on pyrolysis based fuels (8, 9), the method comprising:
enriching charge air with pyrolysis gas (9); and
combusting pyrolysis oil based fuel (8), crude oil based fuel, and/or ethanol/castor oil based fuel with the pyrolysis gas (9) enriched charge air.

15. The method of claim 14, wherein the charge air is enriched with pyrolysis gas (9)
downstream of a compressor system (163, 263) of the internal combustion engine (162, 262) being a single stage compressor system; and/or
downstream of a high-pressure stage of the compressor system (163, 263) being a two stage compressor system; and/or
between a low-pressure stage and a high-pressure stage of the compressor system (163, 263) being a two stage compressor system; and/or
further comprising
controlling the energy content provided by the pyrolysis gas to the combustion to be in the range of about 10 % to 35 %, for example, in the range from 10 % to 30% such as between 20 % to 25 % of the total energy content of fuel combusted in the internal combustion engine; and/or
compressing the pyrolysis gas (9) in dependence of at least one of a load of the internal combustion engine (162, 262), an output and/or intermediate pressure of the compressor system (163, 263), an amount of liquid fuel (8) provided for injection, monitoring a detonation within a cylinder unit (310), and a temperature of the charge air and/or the pyrolysis gas (9).
